## Europäisches Patentamt
## European Patent Office
## Office européen des brevets

(19)

(11) Numéro de publication: **0 070 871**
**B1**

(12)

# FASCICULE DE BREVET EUROPEEN

(45) Date de publication du fascicule du brevet:
**19.06.85**

(51) Int. Cl.⁴: **C 04 B 18/26, C 04 B 20/12**

(21) Numéro de dépôt: **82900547.9**

(22) Date de dépôt: **12.02.82**

(86) Numéro de dépôt international:
**PCT/FR 82/00027**

(87) Numéro de publication internationale:
**WO 82/02710 (19.08.82 Gazette 82/20)**

(54) **PROCEDE DE FABRICATION D'AGREGATS OU DE GRANULES THERMIQUEMENT ISOLANTS ET PRODUIT AINSI OBTENU.**

(30) Priorité: **12.02.81 FR 8102941**

(43) Date de publication de la demande:
**09.02.83 Bulletin 83/6**

(45) Mention de la délivrance du brevet:
**19.06.85 Bulletin 85/25**

(84) Etats contractants désignés:
**CH DE GB LI NL SE**

(56) Documents cités:
**FR - A - 1 064 009**
**FR - A - 1 117 308**
**FR - A - 1 283 272**
**GB - A - 1 341 711**
**GB - A - 2 073 167**

(73) Titulaire: **SOCIETE FRANCAISE D'AGREGATS STABILISES, Route du Saut du Broc, F-88550 Pouxeux (FR)**

(72) Inventeur: **GUIDAT, Gilbert, 14, rue Jean Bioletti, Saint-Laurent, F-88000 Epinal (FR)**

(74) Mandataire: **Metz, Paul et al, Cabinet METZ PATNI 95, rue de la Ganzau, F-67100 Strasbourg (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention se rapporte à un procédé de fabrication d'agrégats ou de granulés thermiquement isolants à incorporer dans le préparations utilisées en bâtiment telles que bétons, mortiers, enduits ... ou à utiliser directement en tant que matériau isolant ou dans la confection de matériaux de construction.

En effet, ce produit constitue une véritable matière première, au même titre que le sable, le gravier et autres composants de bétons, mortiers et enduits. Il constitue également une matière première utilisable directement ou entrant dans la composition d'isolations thermiques et phoniques.

De ce fait, le domaine d'utilisation s'étend à tout le bâtiment sous forme d'utilisation directe par incorporation en tant que composant dans les mélanges appelés à former les bétons isolants, les mortiers, les enduits ... ainsi que les compositions thermiquement et phoniquement isolantes. De plus, on prévoit des utilisations indirectes par la fabrication de matériaux de construction isolants tels que parpaings, agglomérés de toute configuration, hourdis, éléments préfabriqués de murs et de planchers ...

On a cherché à incorporer les déchets de bois dans les bétons et ciments après traitement par minéralisation. Les traitements utilisés ont pour but d'imprégner le bois d'une substance appropriée en vue d'accélérer la prise ou de débarrasser le bois des matières incrustées. Malheureusement ces traitements ne permettent pas d'éviter les inconvénients d'instabilité dimensionelle du bois et de glissement de structures, sources de fissuration.

Le procédé de double minéralisation décrit ci-après permet d'éviter totalement ces inconvénients par un traitement complexe physico-chimique qui donne au bois un caractère parfaitement inerte compatible avec la stabilité des bétons et ciments.

Le procédé selon l'invention a pour but de permettre la fabrication d'agrégats thermiquement isolants de petites dimensions, à partir de déchets de bois de toute nature et, de façon plus générale, à partir de toute matière ligno-cellulosique, par exemple les déchets de végétaux.

En raison de ses particularités et du faible coût de la matière première, ce procédé permet l'élaboration d'un produit isolant de prix de revient peu différent de celui des composants tradiotionnels des mélanges utilisés dans la construction. Il représente un progrès important dans l'utilisation de matières normalement rejetées ou détruites, sans bénéfice aucun pour la société.

A cet effet, le procédé de fabrication du produit isolant selon l'invention se montre remarquable en ce que les déchets de bois et, plus généralement, les déchets de toutes matières ligno-cellulosiques subissent les traitements mécaniques, chimiques et physicochimiques suivants : réduction par effet mécanique, déchiquetage, broyage ou autre, échauffement des fibres, actions successives d'un sel de calcium à forte activité qui dénature la fibre et d'un silicate qui pétrifie la matiére jusqu'à obtention d'agrégats de dimensions prédéterminées, fonction de l'application souhaitée en bâtiment. Un traitement ultérieur permet de transformer ces agrégats ou granulés utilisables directement dans les meilleures conditions en tant qu'isolant thermique.

Une des principales caractéristiques de l'invention concerne la nature même du produit obtenu. Celui-ci présente, en effet, le caractère d'une véritable matière première qui sera utilisée dans le bâtiment au même tritre que n'importe quel autre composant entrant dans la fabrication des produits de base utilisés dans le gros oeuvre.

Les agrégats produits par le procédé selon l'invention présentent une stabilité dimensionnelle et chimique qui laisse espérer des durées de stockage importantes, sans précautions particulières, même à l'extérieur.

De nombreux tests ont montré le caractère parfaitement inerte de ce produit et son aptitude très marquée à une longue conservation dans des conditions climatiques les plus variées.

Les qualités propres qu'il présente: résistance au feu, isolation thermique et phonique, stabilité, faible poids, se transmettent aux mélanges et aux produits finis : bétons, mortiers, enduits, matériaux.

Ainsi, plus particulièrement sa tenue à l'éclatement et sa stabilité procurent aux bétons une résistance à l'échauffement tout à fait intéressante.

Par ailleurs, sa cohésion lui confère des caractéristiques mécaniques remarquables.

De plus, l'énergie nécessaire à la fabrication ne dépasse pas celle des procédés de traitement de type connu, dits économiques.

Il convient d'observer le faible coût de la matière première rècupérée en cycle court : temps d'une récolte pour les déchets végétaux.

D'autres caractéristiques techniques et avantages du procédé selon l'invention et du produit résultant de sa mise en oeuvre apparaîtront à la lecture de la description ci-après effectuée à titre d'exemple non limitatif.

Dans le même esprit, il faut préciser que le champ des matières transformées s'avère particulièrement étendu. Il comprend toutes les matières ligno-cellulosiques depuis les déchets de bois, le liège ... jusqu'aux tiges de végétaux d'agriculture ou autres résidus, par exemple les raffles de maïs. Leur provenance et leur état physique importent peu. On traite, par exemple, les bois bruts avec ou sans écorce.

Selon l'invention, on admet bruts les déchets de toute matière ligno-cellulosique dans une unité de traitement mécanique où ils subissent une réduction en dimension par déchiquetage, broyage ... jusqu'à la granulométrie désirèe, fonction de l'application envisagée. Au cours de cette opération, les déchets perdent pratiquement intégralement les matières étrangères incrustées pour ressortir propres et à peu près identiques en dimensions, à l'état de particules ou de petits morceaux.

Ces particules sont alors reprises pour subir un traitement thermique par étapes successives, par exemple dans un four rotatif à sections chauffantes, jusqu'à des températures comprises entre 400 et 800° C.

On pratique ensuite, sur les particules ou morceaux, par une opération dite d'hydropholysation, une réaction avec un sel de calcium soluble, de préférence celui d'un acide fort.

Par hydropholysation, on entend une réaction qui utilise le caractère hydrophobe du bois ou des fibres ligno-cellulosiques.

On procède par pulvérisation d'une solution de sel de calcium.

Les particules ou petits morceaux de bois s'imprègnent de cette solution qui entre à coeur, attaque toutes les fibres et les neutralise, en raison de l'acidité de cette solution.

La cellulose est neutralisée, mais reste dans le bois à l'état dénaturé, ce qui rend le bois caverneux. Pour réaliser cette opération evec les meilleurs résultats, on préférera le chlorure de calcium parmi tous les sels solubles de calcium.

On fait agir ensuite un silicate soluble, par exemple une solution de silicate de potassium. Les ions calcium présents à l'intérieur du bois se combinent aux ions du silicate de potassium pour former du silicate de calcium, sel très dur et insoluble. On réalise ainsi, à coeur, une véritable coagulation des fibres par précipitation d'un calcaire insoluble.

La création d'innombrables microcavités et l'immobilisation des fibres confèrent au produit une stabilité physique et chimiqe remarquable et lui procurent ses propriétés d'isolant thermique et phonique et de matière ininflammable.

On fabrique ainsi des agrégats légers individualisés en petits volumes, de forme quelconque, que l'on peut utiliser directement en tant que composant dans les mélanges utilisés en bâtiments tels que bétons, mortiers et enduits.

On pourra faire subir ultérieurement aux agrégats ainsi produits, tout traitement approprié tel, par exemple, l'enrobage individuel de charges actives déshydratantes formant ainsi des granulés isolants utilisables directement en tant que matière isolante, par exemple par remplissage.

Il est à remarquer que le procédé selon l'invention reste pratiquement indépendant des dimensions des morceaux traités.

Il est bien entendu que diverses modifications simples, substitutions par des équivalents et autres variantes directes ne sauraient échapper à la présente protection, mais entrent pleinement, au contraire, dans son cadre.

## Revendications

1. Procédé de traitement de déchets de bois ou de matières ligno-cellulosiques, en vue de l'élaboration d'agrégats stabilisés et inertes thermiquement isolants, à incorporer dans les mélanges utilisés en bâtiment tels que mortiers, enduits, revêtements, bétons ... ou à utiliser directement, par exemple en remplissage, à titre de matériaux isolants ou dans la fabrication de matériaux de construction et autres, caractérisé en ce que l'on pratique une réduction en dimensions par effet mécanique, déchiquetage, broyage ou autre jusqu'à la granulométrie désirée, que l'on traite thermiquement les morceaux de bois finement divisés par étapes successives dans un four rotatif jusqu'à des températures comprises entre 400 et 800° C, que l'on imprègne les morceaux ou fragments résultant par pulvérisation d'une solution d'un sel soluble de calcium jusqu'à saturation au coeur de la matière, créant ainsi des microcavités réceptrices, que l'on fait agir ensuite un silicate soluble qui réagit avec le sel de calcium pour former au sein même de la matière du silicate de calcium.

2. Procédé selon la revendication 1 caractérisé en ce que le sel de calcium est celui d'un acide fort.

3. Procédé selon la revendication 2 caractérisé en ce que le sel de calcium préféré est le chlorure de calcium.

4. Procédé selon la revendication 1 caractérisé en ce que le silicate préféré est le silicate de potassium.

5. Procédé selon la revendication 1 caractérisé en ce que l'on traite les agrégats pour les enrober de charges actives déshydratantes afin de réaliser des granulés isolants utilisables directement en tant que matière isolante et déshydratante.

6. Agrégats ou granulés thermiquement isolants susceptibles d'être obtenus par le procédé selon l'une quelconque des revendications 1–5.

## Patentansprüche

1. Verfahren zur Verarbeitung von Holzabfällen oder Holzfaserstoffen im Hinblick auf die Herstellung von dauerhaften und inerten, wärmeschützenden Stoffen als Zusatz zu Gemischen, wie sie beim Bauen verwendet werden, wie z. B. Speis, Putz, Verkleidungsmaterialien, Beton ... oder direkt verwendbar, z. B. zum Ausfüllen in der Eigenschaft als Isoliermaterial oder in der Herstellung von Baumaterialien und sonstiges, dadurch gekennzeichnet, daß man die Abfälle durch mechanische Einwirkung bis auf die gewünschte Teilchengröße zerkleinert, zerstückelt, zerreibt oder ähnliches, daß man die klein zerteilten Holzstückchen in aufeinanderfolgenden Etappen in einem sich drehenden Ofen bis zu Temperaturen zwischen 400 und 800° C wärmebehandelt, daß man die erhaltenen Stückchen oder Teilchen mit einer Kalziumsalzlösung tränkt, bis sie im Innern gesättigt sind und auf diese Weise winzige Hohlräume schafft, und daß man schließlich ein lösliches Silikat einwirken läßt, das mit dem Kalziumsalz eine chemische Reaktion eingeht, um im selben Innern Kalziumsilikat zu bilden.

2. Verfahren laut Anspruch 1, dadurch gekennzeichnet, daß das Kalziumsalz dasjenige einer starken Säure ist.

3. Verfahren gemäß Anspruch 2, dadurch gekennzeichnet, daß das bevorzugte Kalziumsalz Kalziumchlorid ist.

4. Verfahren gemäß Anspruch 1, dadurch gekennzeichnet, daß das bevorzugte Silikat Kaliumsilikat ist.

5. Verfahren gemäß Anspruch 1, dadurch gekennzeichnet, daß man die Stoffe behandelt, um sie mit aktiven feuchtigkeitsentziehenden Substanzen auszustatten, damit man ein isolierendes Granulat erhält, das als Isoliermaterial und feuchtigkeitsentziehendes Material direkt verwendbar ist.

6. Wärmeschutzstoff oder -granulat, erhältlich durch das Verfahren laut irgendeinem der Ansprüche 1—5.

**Claims**

1. Process for the treatment of waste from wood or ligno-cellulosic materials, in order to prepare insulating aggregates which are stabilised and thermally inert, for incorporation into the mixture used in buildings, such as mortar, coatings, coverings, or cement, or to be used directly, for example as fillings, as insulating materials or in the manufacture of construction and other materials, chracterised in that a reduction in dimensions is carried out by a mechanical effect, such as shredding or crushing, until the desired particle size has been achieved, in that the finely divided pieces of wood are treated thermally in successive stages in a rotary oven up to temperatures between 400 and 800°C, in that the pieces or fragments resulting from pulverisation are impregnated with a solution of a soluble calcium salt until they are completely saturated throughout the interior of the material, thus creating receptive microcavities, in that a soluble silicate is then caused to act, which silicate reacts with the calcium salt to form calcium silicate even in the interior of the material.

2. Process according to claim 1, characterised in that the calcium salt is that of a strom acid.

3. Process according to claim 2, characterised in that the preferred calcium salt is calcium chloride.

4. Process according to claim 1, characterised in that the preferred silicate is potassium silicate.

5. Process according to claim 1, characterised in that the aggregates are treated to coat them with active dehydrating fillers so as to form insulting granules which may be used directly as insulting and dehydrating materials.

6. Thermally insulating aggregates or granules capable of being obtained by the process according to any one of claims 1 to 5.